# EUROPEAN PATENT SPECIFICATION

(11) **EP 0 572 497 B1**
(45) Date of publication and mention of the grant of the patent: **10.01.1996**
(21) Application number: 92905530.9
(22) Date of filing: 05.02.1992
(51) Int. Cl.: A01G 23/08

(54) **ARRANGEMENT IN TREE-PROCESSING ASSEMBLY**
ANORDNUNG IN EINER BAUMVERARBEITUNGSMASCHINE
AMENAGEMENT D'UN ENGIN D'EXPLOITATION FORESTIERE

(30) Priority: 21.02.1991 SE 9100512
(43) Date of publication of application: 08.12.1993
(73) Proprietor: LARSSON, Sune, S-822 00 Alfta (SE)
(72) Inventor: LARSSON, Sune, S-822 00 Alfta (SE)
(74) Representative: Johansson, Lars E.
(86) International application number: PCT/SE92/00067
(87) International publication number: WO 92/14352

(56) References cited:
- WO-A-87/05184
- SE-A-89 026 702
- US-A- 4 960 157

## Description

### Field of the Invention

The present invention relates to an arrangement in a tree-processing assembly of the type comprising a frame which is connectible to the tip of a crane via a rotator and with which a pivotable carrier is hingedly connected, said carrier comprising at least one set of grapples for gripping and holding a log, and a cutting tool, such as a chain-saw guide bar, attached to a lower part of said carrier.

Such tree-processing assemblies can be divided into two different basic types, viz. so-called harvesters and pure felling assemblies. A one-grip type harvester comprises, in addition to grapples and a cutting tool, a number of limbing knives and at least one set of feed rolls by means of which the felled tree, which is held by the grapples, can be longitudinally fed relative to the carrier and thus be freed from limbs. By means of such harvesters, a tree can thus be felled, delimbed and cut to suitable lengths. In pure felling assemblies there are, however, no feed rolls, and therefore such assemblies can merely cut the tree at the root, without delimbing it.

### Background of the Invention

In modern forestry, tree stands are in most cases thinned by means of precisely one-grip harvesters. A frequent problem in such thinning is caused by the thicket or shrub layer which is often to be found adjacent the trees which are to be thinned and cut. Thus, such thicket grows precisely around the lower part of the tree where this is to be cut, and thus prevents the clear view of the person who operates the harvester from a driving-cab at a considerable distance from the tree. Besides blocking the operator's view, the thicket causes trouble also by easily finding its way between the the trunk and the saw chain mounted on the guide bar of the harvester and serving as a cutting tool. As a result, the chain may slip or jam and, consequently, lose its capacity of effectively cutting the trunk. To eliminate the problems caused by thicket surrounding the tree, one proceeds in practice usually by letting a special operator manually clean the tree stand from the shrub layer by means of a conventional bush saw, before the actual thinning is carried out. However, this work is costly and, in turn, involves a number of drawbacks. One drawback is that the cleaning operator does not know in advance from which direction the harvester will be moved towards the tree which is to be thinned out, which means that he must remove all the thicket in a 360° sector around the tree. Removing in this manner substantially all the thicket while leaving completely bare surfaces around the tree is, however, contrary to the most recent experience in environment protection, which recommends a certain amount of shrub layer in growing forest, thereby creating a favourable environment for forest animals. By such clear-cleaning, the work of course also takes much time and thus is expensive. In practice, the cost for the manual thicket-cleaning only is estimated at 15-20% of the total thinning cost. A further problem is connected with the technical planning. Thus, especially for big forest owners with a great number of scattered stands it is extremely difficult to plan the cleaning operator's work so as to be reliably coordinated with the thinning operation.

### Brief Description of the Inventive Idea

The present invention aims at obviating the above-mentioned drawbacks by eliminating the need for manual cleaning and creating opportunities for removing, as required, the obstructing thicket and shrub layer in immediate connection with the actual thinning operation. According to the invention, this is achieved in that on the lower part of the carrier of a tree-processing assembly of the type mentioned by way of introduction there is mounted a rotary saw blade which is pivotably movable between an inactive position and an active position in which it can cut shrub layers and/or small trees.

According to a preferred embodiment of the invention, the saw blade is dismountably arranged on a shaft which is rotatably mounted and connected to a hydraulic motor which is arranged on a support member, such as a plate, which in turn is articulated to the lower part of the carrier, and a hydraulic cylinder extends between the support member and the carrier, the support member and, thus, the saw blade being pivotable by means of the hydraulic cylinder between a substantially vertical, swung-in position and a substantially horizontal, swung-out position.

### Brief Description of the Accompanying Drawings

In the drawings
- FIG. 1: is a schematic, simplified front view of a one-grip type harvester with a cleaning arrangement according to the invention,
- FIG. 2: is a perspective view of the cleaning arrangement according to the invention, and
- FIGS 3 and 4: are enlarged side views of the cleaning arrangement according to Fig. 2 in two different positions.

### Detailed Description of a Preferred Embodiment of the Invention

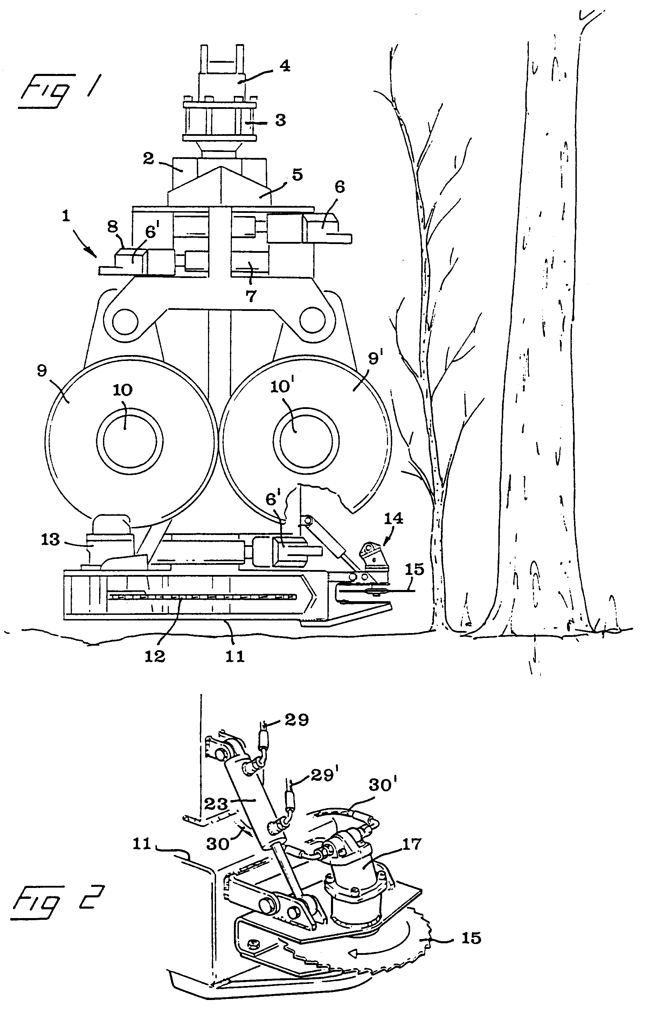

In Fig. 1, a one-grip type harvester is generally designated 1. The harvester comprises in per se known manner a frame 2 which via a rotator 3 is connected to a mounting 4 which in turn can be attached to the tip of a crane mounted on an off-road vehicle. The frame 2 is via a hinge (not shown) connected to a carrier which in its entirety is designated 5 and which in Fig. 1 is shown to be hanging in a substantially vertical position. By means of a hydraulic cylinder (not shown) acting between the frame 2 and the carrier 5, the carrier can be pivoted from the shown, vertical position to a substantially horizontal position in which the carrier is swung forwards in the plane of the drawing. The carrier 5 supports a number of grapples 6, 6', 6'' which are each pivotable by means of a respective hydraulic cylinder 7 and each have limbing knives 8 in the form of obliquely ground surfaces forming cutting edges by means of which a passing log can be freed from limbs. Further the carrier 5 supports two feed rolls 9, 9' which are pivotable towards and away from each other. The feed rolls which are rotatable by means of built-in hydraulic motors 10, 10' serve to be pressed against a cut log received by the grapples and move the log axially relative to the carrier for delimbing thereof. In a lower, box-shaped part 11 of the carrier 5 there is a arranged a cutting tool in the form of a chain-saw guide bar 12 whose chain can be moved by means of a hydraulic motor 13, the guide bar itself being pivotable between an inactive position in the box-shaped part 11 and an active position swung out from the box.

As described so far, the shown arrangement is known in every essential respect.

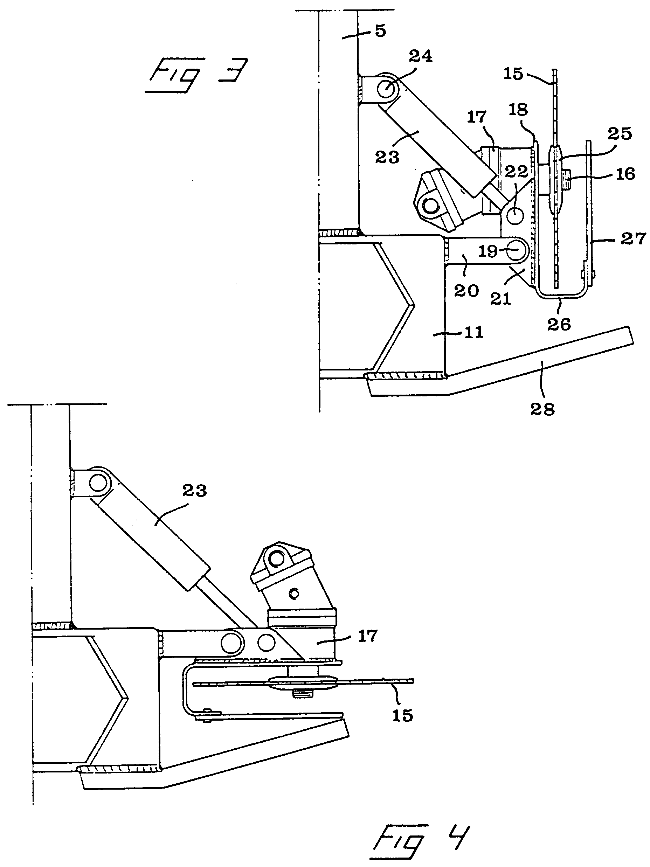

According to the invention, a cleaning arrangement which in its entirety is designated 14 is connected to the lower part 11 of the harvester 1 or, more precisely, to the carrier 5. The characteristic features of this cleaning arrangement are shown in more detail in Figs 2-4 to which reference is now made.

The actively operating component in the arrangement 14 is a rotatable, toothed saw blade 15 which preferably is a standard-type blade and is dismountably arranged on a shaft which can be the output shaft of a hydraulic motor 17 which is mounted on a supporting plate 18. This is in turn articulated to the lower part of the carrier via hinges 19 arranged at the outer end of brackets 20 extending from the lower part 11. To the upper side of the supporting plate 18 there is attached a mounting 21 for a hinge 22 of a hydraulic cylinder 23 whose opposite end is articulated to the carrier 5 via a hinge 24. In the embodiment shown, the piston rod of the hydraulic cylinder is connected to the hinge 22, while the cylinder itself is connected to the hinge 24 associated with the carrier 5. The dismountable arrangement of the saw blade 15 on the shaft 16 can advantageously be realised by means of two supporting discs 25 having internally threaded holes and screwed to an externally threaded portion of the shaft 16. A worn-out saw blade may thus be easily and quickly removed from the shaft by unscrewing the outer supporting disc and be replaced by a new saw blade.

The supporting plate 18 is via an inner cross-member 26 connected with a base plate 27 which is spaced from the supporting plate, the inner half of the saw blade being accommodated in the space formed between the plates 18 and 27. As a result, the saw blade is kept well protected in it inactive, swung-in position shown in Fig. 3. In the area below the saw blade there is further arranged a yoke 28 projecting from the lower edge of the lower part 11 of the carrier. As is evident from Fig. 3, the yoke 28 projects a distance beyond the base plate 27 of the saw blade holder so that the saw blade and its holder, in the inactive position illustrated, are reliably protected against mechanical damage caused by hard objects, such as stones, stumps and thick trees. Also in the active position illustrated in Fig. 4, the yoke 28 protects the saw blade holder from mechanical damage in that the outer end of the yoke is positioned approximately in the same vertical plane as the outer parts of the saw blade holder, beyond which plane only a portion of the saw blade projects.

Although the yoke 28 is shown to be inclined in the drawings, it may also be designed to be entirely straight, extending from the bottom side of the lower part 11. Such a design would also allow the same blade to be slightly lowered, more precisely by arranging the brackets 20 lower down on the outside of the lower part 11.

As shown in Fig. 2, the hydraulic cylinder 23 is double-acting and fitted with suitable hydraulic lines 29, 29'. Analogously, the hydraulic motor 17 is supplied with hydraulic fluid via lines 30, 30'. It is per se conceivable to control the hydraulic motor 17 and the hydraulic cylinder 23 separately by rotating the saw blade independently of whether the hydraulic cylinder is activated or not. In practice, it is however preferred to synchronise the operation of the hydraulic motor with the operation of the hydraulic cylinder, more precisely in such a manner that the starting of the saw blade 15 is automatically accompanied by activation of the positive chamber of the hydraulic cylinder, i.e. the saw blade is swung out a while after it has been caused to rotate. Inversely, the saw blade can be swung back to its inactive position a while after it has been caused to stop. Such synchronisation can be carried out by suitably integrating the above-mentioned lines into the existing system of hydraulic lines that is required for the other components of the harvester.

The above-described arrangement operates as follows. When the harvester 1 should be moved against the selected tree which is to be cut and is surrounded by a shrub layer blocking the operator's view, the saw blade 15 is swung out to the active position shown in Fig. 1. In this state, the saw blade can be quickly moved forwards to individual shrubs and small trees by moving the tip of the crane and rotating the entire harvester via the rotator 3, the shrubs and small trees being cut as soon as the rotating saw blade comes into contact with them. It is of course sufficient to remove merely the vegetation in a limited sector (e.g. 90-120°) in the area in front of the tree which is to be thinned, whereas the remaining vegetation surrounding the tree may be left. Such cleaning can in practice be carried out very quickly, for example in 10-20 s. After the thinning operation has been finished, the saw blade is stopped and swung in to the position shown in Fig. 3, whereupon the harvester, without being obstructed, can smoothly and effectively be caused to grasp the tree and process it in the usual manner, i.e. fell, delimb and cut it to suitable lengths.

The advantages of the invention are obvious. According to the invention, any need for costly manual cleaning thus is eliminated, which means, inter alia, that the planning of the thinning operation is facilitated to a considerable extent. Moreover, there is no need for completely cleaning the area surrounding a tree which is to be thinned in that the direction of travel of the harvester towards the tree is already determined when the cleaning arrangement according to the invention is activated. This means that only a limited sector in front of the tree need be cleaned.

### Possible Modifications of the Invention

The invention is of course not restricted merely to the embodiment described above and shown in the drawings. Thus, the saw blade included in the arrangement can be mounted in other types of holder than precisely the one illustrated in the drawings, and the saw blade can be swung between its two positions in some other way than by means of a hydraulic cylinder, although in practice precisely a hydraulic cylinder is preferred. Furthermore, the cleaning saw blade can be mounted on an arm which is pivotable relative to the carrier in a horizontal plane instead of in a vertical plane, and then, more precisely, between an active front position and an inactive rear position, instead of a swung-out and a swung-in position as illustrated in the drawings. It is also possible to apply the invention also to other types of tree-processing assemblies than precisely a one-grip type harvester. Consequently, the invention may also be applied to pure felling assemblies and two-grip type harvesters.

## Claims

1. Arrangement in a tree-processing assembly of the type comprising a frame (2) which is connectible to the tip of a crane via a rotator (3) and with which a pivotable carrier (5) is hingedly connected, said carrier comprising at least one set of grapples (6, 6', 6'') for gripping and holding a log, and a cutting tool, such as a chain-saw guide bar (12), attached to a lower part (11) of said carrier, **characterised** in that on said lower part (11) of the carrier (5) there is mounted a rotary saw blade (15) which is pivotably movable between an inactive position and an active position in which it can cut a thicket and/or small trees.

2. Arrangement as claimed in claim 1, **characterised** in that the saw blade (15) is dismountably arranged on a shaft (16) which is rotatably mounted and connected to a hydraulic motor (17) which is arranged on a support member, such as a plate (18), which in turn is articulated to the lower part (11) of said carrier, and that a hydraulic cylinder (23) extends between said support member (18) and said carrier (5), the support member (18) and, thus, the saw blade (15) being pivotable by means of said hydraulic cylinder between a substantially vertical, inactive position and a substantially horizontal, active position.

3. Arrangement as claimed in claim 2, **characterised** in that a base plate (27) is connected with the support member or plate (18) via an inner cross-member (26) and is spaced from the supporting plate, at least the inner half of said saw blade (15) being located in the space between the supporting plate (18) and the base plate (27).

4. Arrangement as claimed in claim 2 or 3, **characterised** in that a yoke (28) projects from the lower edge of said lower part (11) of the carrier and serves to protect the saw blade in the inactive position and the components associated therewith from mechanical contact with e.g. stones, stumps, thick trees etc.

## Patentansprüche

1. Anordnung in einer Baumverarbeitungsmaschine der Art, die einen Rahmen (2), welcher mit der Spitze eines Kranes über einen Drehtisch (3) verbindbar ist und mit welchem ein schwenkbarer Träger (5) gelenkig verbunden ist, wobei der Träger zumindest einen Satz Greifer (6, 6', 6'') zum Greifen und Halten eines Baumstammes aufweist, und ein Schneidwerkzeug, wie eine Kettensägenführungsschiene (12) aufweist, die an einem Unterteil (11) des Trägers befestigt ist, dadurch gekennzeichnet, daß am Unterteil (11) des Trägers (5) ein Rotationssägeblatt (15) angebracht ist, welches schwenkbar zwischen einer Ruhestellung und einer Betriebsstellung, in welcher es ein Buschwerk und/oder dünne Bäume schneiden kann, bewegbar ist.

2. Anordnung nach Anspruch 1, dadurch gekennzeichnet, daß das Sägeblatt (15) lösbar auf einer Welle (16) angeordnet ist, welche drehbar angebracht und mit einem Hydraulikmotor (17) verbunden ist, welcher an einem Aufnahmeteil, wie eine Platte (18), angeordnet ist, welcher seinerseits schwenkbar am Unterteil (11) des Trägers angelenkt ist, und daß sich ein Hydraulikzylinder (23) zwischen dem Aufnahmeteil (18) und dem Träger (5) erstreckt, wobei das Aufnahmeteil (18) und daher das Sägeblatt (15) mittels des Hydraulikzylinders zwischen einer im wesentlichen vertikalen Ruhestellung und einer im wesentlichen horizontalen Betriebsstellung verschwenkbar sind.

3. Anordnung nach Anspruch 2, dadurch gekennzeichnet, daß eine Grundplatte (27) mit dem Aufnahmeteil oder der Platte (18) über einen Innenquerträger (26) verbunden ist und im Abstand von der Aufnahmeplatte befindlich ist, wobei sich zumindest die innere Hälfte des genannten Sägeblattes (15) im Bereich zwischen der Aufnahmeplatte (18) und der Grundplatte (27) befindet.

4. Anordnung nach den Ansprüchen 2 oder 3, dadurch gekennzeichnet, daß ein Joch (28) vom unteren Rand des Unterteils (11) des Trägers vorsteht und dazu dient, das Sägeblatt in der Ruhestellung und die diesem zugeordneten Teile vor mechanischer Berührung mit beispielsweise Steinen, Stöcken, starken Bäumen usw. zu schützen.

## Revendications

1. Dispositif dans un système d'exploitation forestière du type comprenant un bâti (2) qui peut être relié à l'extrémité d'une grue par l'intermédiaire d'un organe rotatif (3) et avec lequel est articulé un support pivotant (5), ledit support comportant au moins un ensemble de grappins (6, 6' 6'') pour saisir et retenir une grume, et un outil coupant tel qu'une barre de guidage (12) de scie à chaîne, fixé à la partie inférieure (11) dudit support caractérisé en ce que, sur ladite partie inférieure (11) du support (5), est montée une lame de scie rotative (15) qui est déplaçable par pivotement entre une position de repos et une position de travail dans laquelle elle peut couper des broussailles et/ou des petits arbres.

2. Dispositif selon la revendication 1, caractérisé en ce la lame (15) de scie est installée de manière démontable sur un arbre (16) qui est monté de manière rotative et qui est relié à un moteur hydraulique (17) installé sur un élément de support tel qu'une plaque (18), laquelle est elle-même articulée avec la partie inférieure (11) dudit support, et en ce qu'un vérin hydraulique (23) s'étend entre ledit élément de support (18) et ledit support (5), l'élément de support (18) et donc la lame (15) de scie pouvant pivoter par l'intermédiaire dudit vérin hydraulique entre une position sensiblement verticale de repos et une position sensiblement horizontale de travail.

3. Dispositif selon la revendication 2, caractérisé en ce qu'un socle (27) est relié par un élément transversal intérieur (26) à l'élément ou la plaque de support (18) et est espacé de la plaque de support, au moins la moitié intérieure de ladite lame (15) de scie se trouvant dans l'espace entre la plaque de support (18) et le socle (27).

4. Dispositif selon la revendication 2 ou 3, caractérisé en ce qu'un bras (28) dépasse du bord inférieur de ladite partie inférieure (11) du support et sert à protéger la lame de scie en position de repos, et les organes coopérant avec celle-ci, contre le contact mécanique, par exemple avec des pierres, des souches, des arbres de gros diamètre, etc.
